(19) Europäisches Patentamt
European Patent Office
Office européen des brevets

(11) **EP 3 880 429 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **19808557.3**

(22) Anmeldetag: **18.11.2019**

(51) Internationale Patentklassifikation (IPC):
**B29C 48/435** *(2019.01)* **B29C 48/67** *(2019.01)*
**B29C 48/76** *(2019.01)*

(52) Gemeinsame Patentklassifikation (CPC):
**B29C 48/435; B29B 7/485; B29B 7/489;**
**B29B 7/845; B29C 48/67; B29C 48/767**

(86) Internationale Anmeldenummer:
**PCT/EP2019/081697**

(87) Internationale Veröffentlichungsnummer:
**WO 2020/099684 (22.05.2020 Gazette 2020/21)**

(54) **ENTGASUNGSEXTRUDER MIT EINER MULTISCHNECKENEINHEIT UND VERFAHREN ZUR ENTGASUNG VON POLYMERSCHMELZE DAMIT**

DEGASSING EXTRUDER HAVING A MULTI-SCREW UNIT AND METHOD FOR DEGASSING POLYMER MELTS THEREWITH

EXTRUDEUSE DE DÉGAZAGE DOTÉE D'UNE UNITÉ MULTIVIS ET PROCÉDÉ PERMETTANT LE DÉGAZAGE D'UNE MASSE FONDUE POLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2018 DE 102018128884**
**15.10.2019 DE 102019127884**

(43) Veröffentlichungstag der Anmeldung:
**22.09.2021 Patentblatt 2021/38**

(73) Patentinhaber: Gneuss GmbH
**32549 Bad Oeynhausen (DE)**

(72) Erfinder:
• GNEUSS, Stephan
**32547 Bad Oeynhausen (DE)**

• **GNEUSS, Daniel**
**Charlotte, NC, 28277 (US)**
• **GNEUSS, Detlef**
**6919 Carabietta Tessin (CH)**

(74) Vertreter: **Tarvenkorn, Oliver**
**Boehmert & Boehmert**
**Jägerhofstraße 21**
**40479 Düsseldorf (DE)**

(56) Entgegenhaltungen:
WO-A1-03/033240       WO-A1-2014/183984
WO-A1-2016/081474     CN-A- 1 775 506
CN-A- 101 293 397     DE-B3- 102013 003 380

**Beschreibung**

Die Erfindung betrifft einen Entgasungsextruder mit einer Multischneckeneinheit mit den Merkmalen des Oberbegriffs des Anspruchs 1 sowie ein Verfahren zur Entgasung von Polymerschmelze damit.

Bei der Aufbereitung von Polykondensaten wie insbesondere Polyester ist es wichtig, das Spaltprodukt - meist Wasser - stetig abzuführen, um die Polymerkettenlänge zu vergrößern oder zumindest zu erhalten und eine weitere Degradation des aufgeschmolzenen Polymers zu verhindern. Dies ist gerade bei anspruchsvollen Fertigungstechniken wie der Herstellung feiner Spinnfasern wichtig, welche eine hohe Polymerqualität und insbesondere eine hohe intrinsische Viskosität erfordern.

Die WO 2013 180 941 A1 beschreibt ein Verfahren zur Herstellung von *Bulk Continuous Carpet Filament* (Carpet-BCF) aus Recycling-Polyester. Dabei ist vorgesehen, einen Strom von aufgeschmolzenem Polymer in wenigstens zwei Einzelströme aufzuteilen. Die Einzelströme sollen getrennt voneinander durch Anlegen und Halten eines Vakuums in gesonderten Extrudern entgast werden, bevor sie wieder zu einem Gesamt-Schmelzestrom vereinigt werden, der dann einer nachgeschalteten Spinnvorrichtung direkt zugeführt werden soll. Die Aufteilung in mehrere Einzelströme, die in parallel angeordneten Extrudern verarbeitet werden, führt aber zu einem hohen apparativen Aufwand hinsichtlich Kosten, Platzbedarf, Synchronisation usw. Zur Durchführung des Verfahrens ist als Ausführungsbeispiel weiterhin ein Mehrwellenextruder angegeben, welcher die Funktion der mehreren separaten Extruder in einer einzigen Baueinheit abbilden soll und welcher die getrennten Schmelzeströme voneinander unabhängig entgasen soll, bevor sie wiedervereinigt werden. Dazu rotiert eine Multirotationseinheit um eine zentrale Achse, in dem mehrere Satellitenschnecken rotierbar gelagert sind. Zur Entgasung ist ein Gehäuse vorgesehen, das eine Öffnung besitzt, welche mit einer Vakuumpumpe verbunden ist. Die Aufteilung in voneinander getrennte Teil-Schmelzeströme hat zwar gegenüber einem Monostrom den Vorteil, dass die Polymeroberfläche, an der ein Gasaustausch erfolgen kann, vergrößert ist. Die Entgasung der einzelnen Schmelzeströme, welcher über die Satellitenschnecken geleitet werden, kann jedoch nur in dem kurzen Moment stattfinden, in welchem während der Rotation des Multischneckeneinheit die jeweilige Satellitenschnecke mit ihrem Teil-Schmelzestrom an der Öffnung im Gehäuse vorbeigeführt wird. Es bleibt offen, wie die dauerhafte Aufrechterhaltung eines konstant niedrigen Drucks zwecks Entgasung in jedem Teil-Schmelzestrom aufrechterhalten werden soll, obwohl die zugehörige Satellitenschnecke immer nur kurz durch die Öffnung des Gehäuses hindurchbewegt wird und dann für den Rest der Umdrehung außerhalb des Einflussbereichs des Vakuums ist.

Die WO2003/033240 A1 beschreibt ein MRS-System, welches mehrere Satellitenschnecken umfasst.

Diese bewirkt eine deutliche Vergrößerung der Oberfläche der Polymerschmelze und verbessert die Schmelzequalität deutlich. Querströmungen über das Rotorelement hinweg, von einer Satellitenschnecke zur nächsten, sind möglich und erwünscht. Den Satellitenschnecken ist der Hauptteil der Förderung der Polymerschmelze auferlegt, während ein nur schwach ausgeprägter Schneckensteg auf dem Rotorelement einen kleineren Anteil an der Förderung hat, der vornehmlich dazu dient, das Rotorelement mit Schmelze zu umgeben und so quasi eine Schmierung im Gehäuse zu bewirken.

In der CN 101293397 A und in der CN 101837633 A ist jeweils eine Multischneckeneinheit beschrieben, bei dem die Satellitenschnecken vollständig innerhalb des Schneckengangs der Hauptschneckenstegs auf dem zentralen Rotorelement liegen. Daher fördern sie über ihre Stege die Polymerschmelze parallel zum Kern des Rotorelement in Längsrichtung. Weil sich die Satellitenschnecken mit ihrem ganzen Querschnitt durch die Hauptschneckenstege hindurch erstrecken, wird die Schmelze nicht nur entlang des Hauptschneckenstegs gefördert, sondern es treten Teilströme auf, die die Hauptschnecke überbrücken. Die wirkt einer zur Entgasung förderlichen Aufwirbelung und langen Verweilzeit im Bereich der Absaugöffnung entgegen.

Die CN 1775506 A zeigt eine Multischneckeneinheit beschrieben, das nicht zur Entgasung vorgesehen ist. Die Satellitenschnecken sind jeweils mit einem überwiegenden Teil ihres Gesamtquerschnitts von den Wandungen einer Aufnahmenut am zentralen Rotorelement eingefasst. Die Schneckenwendeln auf den Satellitenschnecken besitzen eine sehr geringe Steghöhe.

In WO2016/081474A1 wird ein Entgasungsextruder beschrieben, der einen Hauptrotorkörper besitzt, in welchem mehrere Satellitenschnecken drehbar gelagert sind. Ein Vakuum wird angelegt, um in der Kunststoffschmelze enthaltene Gasblasen herauszulösen. Der Hauptrotorkörper besitzt in den Umfangsbereichen für die Aufnahmenuten für die Satellitenschnecken keinen Schneckensteg.

In WO2014183984A1 wird ein Extruder beschrieben, der einen Hauptrotorkörper besitzt, in welchem mehrere Satellitenschnecken drehbar gelagert sind. Die Satellitenschnecken rotieren im gleichen Drehsinn wie der Hauptrotorkörper. Der Extruder ist dafür vorgesehen und ausgebildet, möglichst viel Treibmittel in eine Kunststoffschmelze einzuarbeiten, um eine Kunststoffschmelze mit hohem Gasanteil zur Ausbildung eines Kunststoffschaums zu erhalten. Der Hauptrotorkörper besitzt in den Umfangsbereichen für die Aufnahmenuten der Satellitenschnecken abschnittsweise einen Schneckensteg.

Die Aufgabe der vorliegenden Erfindung besteht darin, einen Entgasungsextruder anzugeben, mit dem die Qualität der darin verarbeiteten Polymerschmelze erhöht werden kann. Insbesondere soll als Voraussetzung dafür eine große Polymeroberfläche erzeugt werden und/oder ein hoher Oberflächenaustausch in der Polymerschmelze bewirkt werden, wenn die Polymerschmelze die Absaugöffnung passiert oder auch schon davor.

Diese Aufgabe wird durch Entgasungsextruder mit einer Multischneckeneinheit mit den Merkmalen des Anspruchs 1 gelöst.

Der erfindungsgemäße Ansatz ist genau konträr zu dem oben beschriebenen Stand der Technik in Form des sog. Multi-Rotations-Systems und grenzt sich schon in der Terminologie davon ab. Die Multischneckeneinheit nach der Erfindung kann auch als ein 'entgasender Monorotor-Extruder' bezeichnet werden, da die Förderwirkung ganz überwiegend von den im zentralen (Mono-)Rotorelement eingeschnittenen Gängen geleistet wird und da die Satellitenschnecken die Entgasungswirkung verbessern, ohne selbständig zu fördern.

Die Förderwirkung erfolgt ganz überwiegend durch wenigstens einen Hauptschneckensteg, der außen auf dem Rotorelement ausgebildet ist. Der Hauptschneckensteg ist so hoch über einem Wellenkern des Rotorelements ausgebildet bzw. die zwischen den Stegen ausgebildeten Gänge sind so tief eingeschnitten, dass eine Förderwirkung allein durch den Hauptschneckensteg gegeben ist. Demgegenüber tritt die Förderwirkung der Satellitenschnecken deutlich zurück oder hat gar keinen nennenswerten Anteil mehr daran. Stattdessen dienen die Satellitenschnecken der Umwälzung, Auflockerung und Durchmischung der Polymerschmelze. Dies ist darauf zurückzuführen, dass die Satellitenschnecken so tief wie möglich in der Rotorwelle gelagert sind, so dass deren Förderwirkung weitgehend aufgehoben oder wesentlich reduziert ist.

Die mit der Erfindung erzielten Vorteile bestehen nicht nur in einer besseren Durchmischung und einer besseren Entgasung. Weiterhin wird die Scherung des Polymers vermindert. Die Minderung der mechanischen Scherung führt schon allein zu einer verbesserten Schmelzequalität. Außerdem wird mit geringerer Scherung der Wärmeeintrag in die Schmelze reduziert; Überhitzungen werden vermieden.

Dadurch, dass die Satellitenschnecke mit einem großen Anteil ihrer Mantelfläche aus dem Rotorelement herausragt, vergrößert sich die Oberfläche der Hauptschnecke entsprechend. Eine größere Oberfläche führt zu einer stärkeren Ausbreitung in die Fläche und verbessert die Entgasungswirkung.

Die Steghöhe des Hauptschneckenstegs ist vorzugsweise größer als die maximale Gangtiefe der Aufnahmenuten. Die Steghöhe des Hauptschneckenstegs ist vorzugsweise mindestens so hoch ist wie die Höhe des Schneckenstegs auf den Satelliten, insbesondere mindestens doppelt so hoch.

Bevorzugt ist der Drehsinn der Satellitenelementen mit den Schnecken gegenläufig zu dem des Rotorelements mit seinem Hauptsteg und die Orientierung der Satellitenschneckenstege ist entgegengesetzt zur Orientierung des Hauptschneckenstegs. Soweit überhaupt noch eine Förderwirkung von den Satellitenschnecken ausgeht, ist diese axial in die gleiche Richtung wie die Förderung durch den Hauptschneckensteg gerichtet. Dennoch ergibt sich innerhalb der Gänge der Hauptschnecke eine gegenläufige Relativbewegung zwischen dem Rotorelement und der jeweiligen Satellitenschnecke, was die Auflockerung der geförderten Schmelze und folglich deren Entgasung verbessert. Konstruktive Vorteile bestehen darin, dass die Satellitenschnecken endseitig mit Ritzeln versehen werden können, die in direktem Eingriff mit einem Zahnkranz sind, der am Rotorelement ausgebildet oder befestigt ist.

Dort, wo die Satellitenschnecken durch den Hauptschneckenstege hindurchlaufen, sind sie vorzugsweise zu mindestens 70% des Umfangs eingefasst. Damit können nur geringe Strömungen längs des Rotorelements durch die verbleibenden Freiräume zwischen Hauptschneckensteg und Satellitenschnecke gelangen. Die Förderwirkung des Hauptschneckenstegs bleibt erhalten. In dem Längenbereich zwischen benachbarten Teilen des Hauptschneckenstegs sind die Satellitenschnecken hingegen deutlich weniger von der Aufnahmenut, in der sie angeordnet sind, eingefasst und liegen mindestens zur Hälfte offen. Damit bilden sie kein Förderelement wie bei einem Extruder mehr, sondern sind vor allem Mischelemente für die Polymerschmelze.

Als 'Einfassungsgrad' wird im Sinne der vorliegenden Erfindung das Verhältnis zwischen demjenigen Anteil des Umfangs des Satellitenmischelements bezeichnet, welcher durch Wandungen des Rotorelements und seines Hauptschneckenstegs abgeschirmt ist, im Verhältnis zum Gesamtumfang.

Das Rotorelement bietet mit seinem großen Durchmesser und Umfang, über den wenigstens ein nahezu ununterbrochener Hauptschneckensteg verläuft, eine große Oberfläche, auf der der Schmelzestrom ausgebreitet wird. Dies begünstigt zum Beispiel die Entgasung der Polymerschmelze, wenn sie an einer Gehäuse-Absaugöffnung entlanggeführt wird, an der ein Vakuum anliegt. Zum anderen führen die zwischen den benachbarten Teilen des Hauptschneckenstegs liegenden Schneckengänge einen einheitlichen Schmelzestrom mit sich anstatt vieler einzelner Schmelzströme. Der einheitliche Schmelzestrom wird aufgrund der Rotation des Rotorelements mehrfach gezielt an der Gehäuse-Absaugöffnung vorbeigeführt, an der das Vakuum anliegt. Es gibt also insbesondere eine definierte Verweilzeit im Einflussbereich des Vakuums.

Die Satellitenschnecken dienen erfindungsgemäß, wie bereits ausgeführt, nicht der Förderung von einzelnen Schmelzeströmen, sondern liegen vielmehr vertieft innerhalb des Schneckengangs des Rotorelements, wobei sie sich in den Hauptschneckengang soweit öffnen, dass sie eine Umwälzung derjenigen Anteile der Schmelze bewirken, welche sich unten im Fuß des Schneckengangs im Hauptschneckensteg befindet. Die Satellitenschnecken bewirken somit eine Auflockerung, Durchmischung und Ortsveränderung einzelner Teile eines ansonsten einheitlichen Schmelzestroms, welcher durch den Gang der Hauptschnecke hindurch läuft und sorgen dafür, dass die Entgasungswirkung durch das Vakuum ständig bei dem ganzen über das Rotorelement geförderten Schmelzestrom besteht und nicht nur bei den ganz außen befindlichen Anteilen.

Schon eine einzelne Satellitenschnecke verbessert die Durchmischung und Oberflächenvergrößerung der Polymerschmelze. Vorzugsweise sind wenigstens drei Satellitenschnecken in gleichmäßiger Winkelteilung auf dem Rotorelement angeordnet. Zur Auswahl der Anzahl von Satellitenschnecken gelten folgende Überlegungen:

- Wird der Entgasungsextruder vor allem zur Durchmischung mehrerer Komponenten oder zur Homogenisierung einer Komponente eingesetzt, so kann die Mischwirkung durch eine Erhöhung der Anzahl der Satellitenschnecken erhöht werden.
- Liegt der Fokus auf der Entgasung, so ergibt sich ein Einfluss der Mischwirkung auf die Entgasungseffizienz. Bei erhöhter Anzahl der Satellitenschnecken kann der erforderliche Partialdruck im Entgasungsraum erhöht werden, also der Druck im Einflussbereich des Vakuums erhöht werden.

Bei gegebener Anwendung legt man somit die Zahl der Satellitenschnecken fest und kommt durch einen einfachen Versuch zum gewünschten optimalen Druckbereich für die Verfahrensführung, indem schrittweise ein Druck von zum Beispiel kleiner 0,1 mbar bis über 1 bar angelegt wird und das auf diese Weise behandelte Produkt für mehrere Versuchsstufen analysiert wird.

Die Querschnittsfläche im Hauptschneckengang ist im Verhältnis zu einem Nenn-Volumenstrom für den Entgasungsextruder so gewählt, dass der Querschnitt im Normalbetrieb nicht vollkommen gefüllt ist. Wegen des niedrigen Füllgrads kann sich die Saugwirkung des Vakuums indirekt auch auf all jene Umfangsbereiche an dem Rotorelement erstrecken, die sich gerade nicht unmittelbar im Bereich der Gehäuseöffnung befinden.

Erfindungswesentlich ist, dass der Hauptschneckensteg jeweils nur eine möglichst geringe Öffnung an derjenigen Stelle besitzt, an der die Satellitenschnecken durch den Hauptschneckensteg hindurchlaufen. Die Satellitenschnecke ist hier mit einem größeren Anteil ihres Umfangs von Querschnittsflächen des Rotorelements einschließlich des Hauptschneckenstegs eingefasst als in den axialen Bereichen dazwischen.

Wenn der Einfassungsgrad der Satellitenschnecke in den Gängen 50% oder weniger beträgt, bedeutet dass, dass 180° des Umfangs oder mehr frei liegen. Eine formschlüssige Führung der Satellitenschnecke in den Aufnahmenuten ist dann in diesen Zonen nicht gegeben, so dass die zusätzlich durch den Hauptschneckensteg gegebene Einfassung der Satellitenschnecke so groß sein sollte, dass dort mehr als 180° des Umfangs eingefasst sind, also der Einfassungsgrad mehr als 50% beträgt. Die Führung erfolgt dann zwingend durch eine ausreichend große Einfassung im Bereich der Hauptschneckenstegs. Überraschenderweise reicht maschinenbaulich die Führung durch die relativ kurzen Stegabschnitte aus.

Die Einfassung der Satellitenschnecken muss entweder in der Aufnahmenut größer als 50% sein oder, wenn dies nicht möglich ist, zumindest beim Durchgang durch den Hauptschneckensteg mehr als 50% betragen. Vorzugsweise sollte im axialen Verlauf der Satellitenschnecken der Einfassungsgrad an wenigstens einer Stelle mehr als 70% betragen. Zusammen mit dem meist am rückwärtigen Ende angebrachten Antriebsritzel ergeben sich somit wenigstens zwei Lagerpunkte zur formschlüssigen Führung der Satellitenschnecke.

Ein möglichst großer Einfassungsgrad an denjenigen Stellen, an denen die Satellitenschnecken jeweils durch den Hauptschneckensteg treten, ist auch deshalb vorteilhaft, weil eine kleine Öffnungsausnehmung im Hauptschneckensteg die Förderwirkung des Hauptschneckenstegs erhält, das heißt, die Schmelze, kann nicht bei kleinen Öffnungsausnehmungen keine wesentlichen Querströmungen ausbilden und muss vielmehr unweigerlich dem Verlauf des Hauptschneckenstegs folgen. Dabei wird sie mehrfach an der Gehäuseöffnung vorbeigeführt und die Entgasungswirkung ist verbessert.

Beim erfindungsgemäßen Entgasungsextruder sind die folgenden Parameter abzustimmen:

- Außendurchmesser des Rotorelements, gemessen an der Oberkante des Hauptschneckenstegs;
- Höhe des Hauptschneckenstegs über dem Rotorkern;
- Breite des Hauptschneckenstegs;
- Durchmesser des Teilkreises auf dem Rotorelement, auf dem die wenigstens eine Satellitenschnecke angeordnet ist, und
- Durchmesser der Satellitenschnecken und Höhe von deren Satellitenschneckenstegen.

Daraus resultierend ergibt sich die Öffnungsweite bzw. der Öffnungswinkel der Öffnungsausnehmung im Hauptschneckensteg.

Bei Multischneckeneinheiten mit kleinen Nenndurchmessern und einer entsprechend kleinen Zahl von 3 bis 5 Satellitenschnecken ist vorzugsweise vorgesehen, dass der Kern der Satellitenschnecke, also ihr zentraler Querschnittsteil ohne den außen liegenden Satellitenschneckensteg, vollständig oder fast vollständig innerhalb der Umfangslinie des Rotorkerns platziert ist. Diese Beziehung führt dazu, dass die Höhe der Satellitenschneckenstege ungefähr gleich groß zur Höhe des Hauptschneckenstegs ist und dass die Satellitenschnecken das Fördervolumen im Hauptschneckensteg nicht einschränken.

Die Summe aus dem Durchmesser des Teilkreises und dem Durchmesser der Satellitenschneckenstege darf nicht größer sein als der Außendurchmesser des Rotorelements. Das bedeutet, dass die Schneckenstege der Satellitenschnecken niemals radial über die Oberkante des Hauptschneckenstegs hinausragen. Dadurch kann der Spalt zwischen der Außenkante des Hauptschneckenstegs und der Gehäuseausnehmung sehr klein gehalten werden.

Auf der anderen Seite müssen Teilkreis und Durchmesser der Satellitenschnecken so gewählt sein, dass die Satellitenschneckenstege überhaupt ausreichend über den Grund der Schneckengänge im Hauptschneckensteg hinausragen, um ihre auflockernde Wirkung erzielen zu können.

Vorzugsweise ist eine Abstimmung in der Weise vorgesehen, dass die Satellitenschnecken außerhalb derjenigen Stellen, an denen sie durch den Hauptschneckensteg hindurchgeführt sind, mit mindestens 40% und maximal 70% ihres Umfangs von den Flanken der Aufnahmenut eingefasst sind und ansonsten außerhalb davon frei im Schneckengang liegen.

Schwierig ist, dass die Satellitenschnecken mit zunehmender Gangtiefe nicht mehr gut durch die Einfassung in den Aufnahmenuten im Rotorelement geführt sind. Der Einfassungsgrad an den Aufnahmenuten sinkt schnell unter 60%, wenn der Teilkreisdurchmesser größer als der Durchmesser des Rotorkerns ist. Dies ist insbesondere bei größeren Rotordurchmessern erforderlich, weil die Größe der Satellitenschnecken und deren Steghöhe begrenzt ist und nicht proportional zum Durchmesser des Rotorkerns vergrößert werden.

Zusammenfassend ergeben sich folgende geometrischen Forderungen bezüglich der Einfassung der Satellitenschnecken nach der Erfindung:

- Innerhalb der Gänge zwischen den Hauptschneckenstegen soll die Einfassung durch die Aufnahmenuten weniger als 50% betragen, damit die Satellitenschnecken keine wesentliche Förderwirkung mehr entfalten und stattdessen ein besserer Schmelzeaustausch über den Umfang des Rotors hinweg erreicht wird.
- Innerhalb des Durchgangs durch den Hauptschneckensteg soll die Einfassung so groß wie möglich sein, um eine nicht durch den Hauptschneckensteg bewirkte Förderung in Längsrichtung zu unterbinden. Jedoch muss der Einfassungsgrad am Hauptschneckensteg in jedem Fall größer sein als in den offenen Bereichen der Gänge.
- Entweder in den offenen Bereichen im Gang oder aber im Durchgang durch den Hauptschneckensteg muss an zumindest einer Stelle ein Einfassungsgrad von mehr als 50%, insbesondere wenigstens 60% erreicht werden, um eine formschlüssige mechanische Führung der Satellitenschnecken im Rotorelement zu bewirken.

Neben diesen auf den Querschnitt bezogenen geometrischen Beziehungen gilt für die Betrachtung der Führung der Schnecken auf der Rotoreinheit über die Länge:

- über mehr als 70% der Länge der für die Entgasung wirksamen Länge des Rotorelements erfolgt die Einfassung durch den Rotorwellenkern und
- über mehr als 5% aber weniger als 20% der Länge erfolgt die Einfassung durch die Stege.

Betrachtet man die Verteilung von Stegbreite zu Gangbreite, sollte das Verhältnis höchstens 1:4 betragen und eher kleiner sein, die Stegbreite also 20% der Steigung der Schnecke oder weniger einnehmen, um möglichst viel Fördervolumen für die Schmelzeförderung und -entgasung zur Verfügung zu haben und möglichst wenig durch den Hauptschneckensteg auszufüllen.

Bei der Anwendung des erfindungsgemäßen Entgasungsextruders zur Verarbeitung von Polymerschmelze sind wenigstens folgende Verfahrensschritte vorgesehen:

- Zuführen eines Schmelzestroms zu dem in der Gehäuseausnehmung drehbar angeordneten Rotorelement, das am Umfang mehrere drehbare Satellitenschnecken aufweist; der Antrieb erfolgt über eine Innenverzahnung in der Gehäuseausnehmung mit der die ebenfalls verzahnten Enden der Satellitenschnecken direkt oder indirekt im Eingriff stehen;
- flächige Verteilung des Schmelzestroms auf dem Umfang des Rotorelements und auf den Satellitenschnecken durch Rotation des Rotorelements gegenüber dem Gehäuse;
- Abführen der Polymerschmelze von dem Rotorelement und von den Satellitenschnecken zu wenigstens einem Auslaufkanal.

Dabei wird die auf dem Rotorelement verteilte Polymerschmelze über die Länge des Rotorelements mittels wenigstens eines auf dem Außenumfang des Rotorelements angeordneten Hauptschneckenstegs gefördert und durch die wenigstens eine Satellitenschnecke vom Grund des Gangs her aufgelockert. Wenn mehrere Satellitenschnecken vorhanden sind, wird dadurch zugleich Polymerschmelze zwischen den benachbarten Satellitenschnecken ausgetauscht.

Vorteilhaft ist es in dem Verfahren, wenn der Volumenstrom der zur Multischneckeneinheit zugeführten Polymerschmelze und der davon abgeführte Volumenstrom derart aufeinander abgestimmt werden, dass das zwischen den benachbarten Abschnitten des Hauptschneckenstegs, der Außenseite des Rotorelements und der Innenseite der Gehäuseausnehmung eingeschlossene Fördervolumen bzw. der im Längsschnitt des Rotorelements betrachtete Förderquerschnitt zu weniger als 100% mit Polymerschmelze gefüllt ist, insbesondere zu weniger als 80%. Die Reduktion des sogenannten Füllgrads führt dazu, dass viel freier Raum zur Verfügung steht, um die Polymerschmelze durch die Satellitenschnecken zu verwirbeln, die Oberfläche zu vergrößern und die Durchmischung benachbarter Anteile des Schmelzestroms zu intensivieren.

Mit dem Verarbeitungsverfahren unter Anwendung eines erfindungsgemäßen Entgasungsextruders können insbesondere folgende Polymerschmelzen verarbeitet werden:

- Polyester für verschiedene Anwendungsgebiete, insbesondere auch Polyester in verschiedenen Faserformen wie Bulk Continuous Filament (BCF), das zur Teppichherstellung geeignet ist. Dabei kann das in einem Entgasungsextruder nach der Erfindung behandelte Polyester direkt in einen Spinnprozess eingeleitet werden.
- Polyamid.

Die Erfindung wird nachfolgend mit Bezug auf die Zeichnungen näher erläutert. Die Figuren zeigen im Einzelnen:

Fig. 1    einen Entgasungsextruder in seitlicher Ansicht;

Fig. 2    ein Rotorelement in perspektivischer Ansicht;

Fig. 3    einen Ausschnitt einer Seitenansicht einer Multischneckeneinheit;

Fig. 4    eine schematische Abwicklung des Umfangs des Rotorelements;

Fig. 5    das Rotorelement im Schnitt;

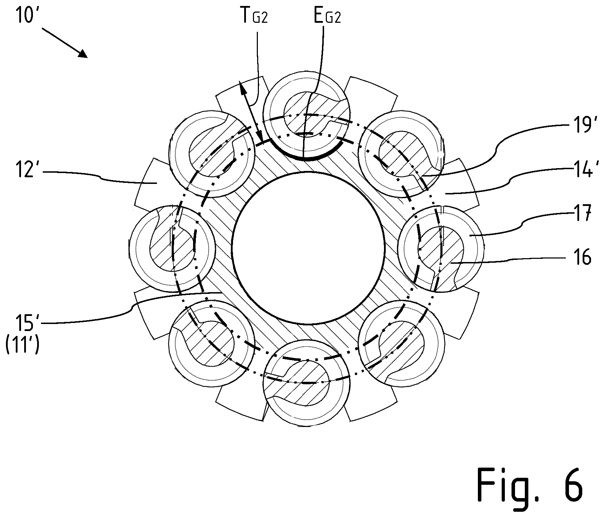

Fig. 6    das Rotorelement einer dritten Ausführungsform im Schnitt und

Fig. 7    das Rotorelement einer dritten Ausführungsform im Schnitt.

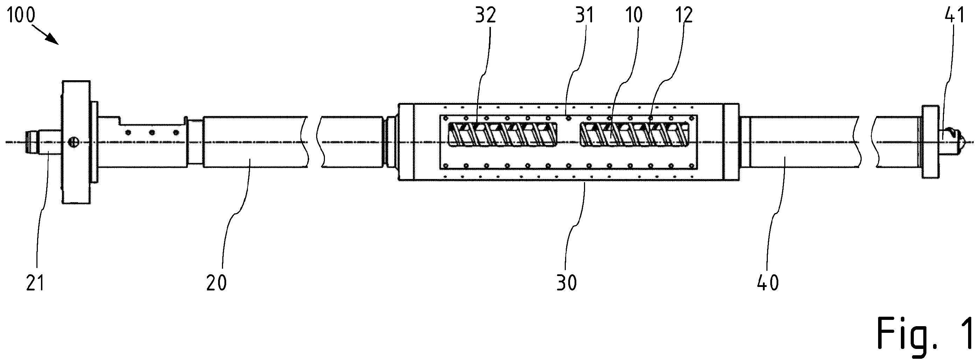

In Figur 1 ist ein Entgasungsextruder 100 in seitlicher Ansicht dargestellt. Dieses umfasst seitlich neben einem Gehäuse 30 einen Zulaufbereich 20, der im dargestellten Ausführungsbeispiel lang ausgebildet ist. Dieser weist in einem innenliegenden Zulaufkanal eine rotierende Schneckenwelle 21 auf. Weiterhin schließt sich zur anderen Seite des Gehäuses 30 ein Auslaufbereich 40 mit einem innenliegenden Auslaufkanal an, in dem ebenfalls eine rotierende Schneckenwelle 41 angeordnet ist. Das Gehäuse 30 ist in Figur 1 von derjenigen Seite gesehen dargestellt, die zwei Gehäuseöffnungen 32 nebeneinander aufweist, welche innerhalb eines gemeinsamen Flanschbereichs 31 angeordnet sind, an welchem wiederum eine Vakuum-Absaugleitung angebracht werden kann. Durch die Gehäuseöffnungen 32 hindurch sind im Inneren Teile einer Multischneckeneinheit 10 sichtbar, wobei insbesondere die im Vergleich zum Stand der Technik ganz wesentlich vergrößerte Gangtiefe bzw. Steghöhe eines Hauptschneckenstegs 12, der sich über den Außenumfang eines Rotorelements 11 erstreckt, auffällt.

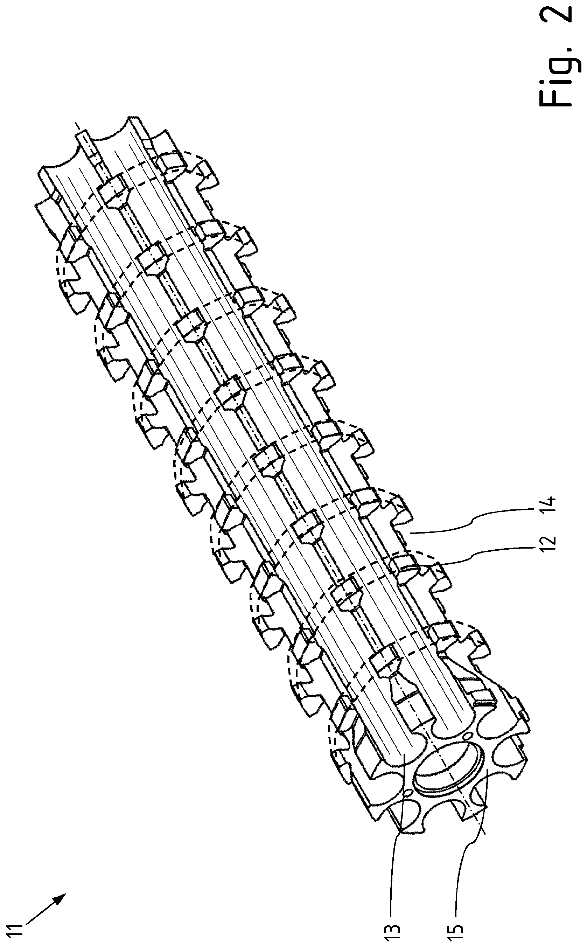

Figur 2 stellt das Rotorelement 11 in einer perspektivischen Ansicht dar. Ein Wellenkern 15 ist an seinem Außenumfang von dem Hauptschneckensteg 12 umgeben. Außerdem sind am Außenumfang insgesamt acht um jeweils 45° versetzt zueinander angeordnete Aufnahmenuten 13 für Satellitenschnecken ausgebildet. In Fig. 2 ist bereits erkennbar, dass eine relativ große Gangtiefe bei den im Hauptschneckenstege 12 ausgebildeten Gang 18 vorgesehen ist.

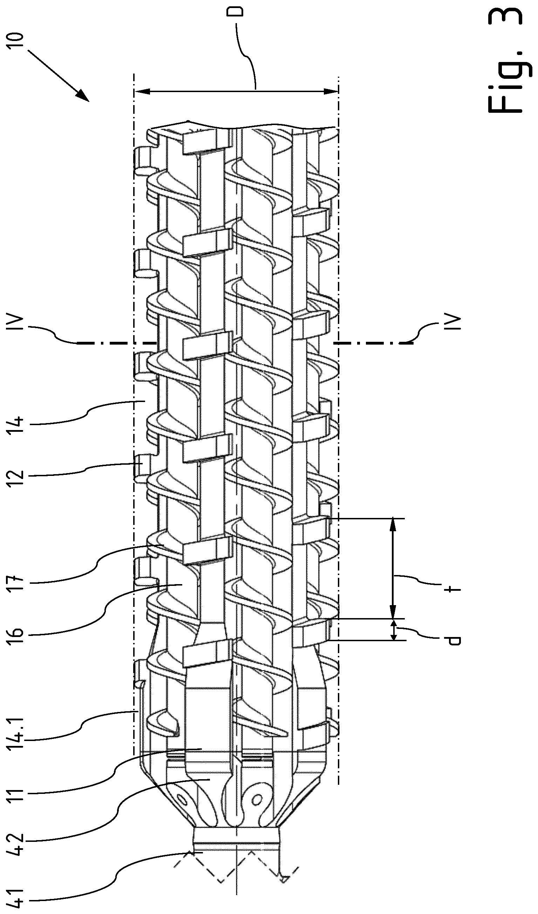

Besonders deutlich wird das auch in Figur 3, die einen Ausschnitt einer Seitenansicht der Multischneckeneinheit 10 zeigt, und zwar das in Strömungsrichtung vordere Ende, das an einem Übergangskonus 42 in die Austragsschnecke 41 übergeht. Nur unmittelbar vor dem Übergangskonus 42 besitzt das Rotorelement 11 einen Gang 14.1 mit geringer Tiefe. In den übrigen Bereichen rechts davon ist der Gang 14 deutlich tiefer eingeschnitten, wobei die Gangtiefe radial vom Außenumfang des Hauptschneckenstegs 12 zum Außenumfang des Wellenkrens 15 gemessen wird.

Der Durchmesser des Rotorelements 11 ist mit D bezeichnet; t bezeichnet die Steigung des Hauptschneckenstegs 12, wobei die Steigung t in der Regel als dimensionslose Zahl angegeben wird, die die Relation von axialem Abstand der Stegabschnitte an derselben Winkelposition bezogen auf den Durchmesser D angibt. Die Gangsteigung ist dann der auf dem Hauptschneckensteg messbare Abstand von einer Stegkante zur nächsten, gemessen an derselben Winkelposition und berechnet sich als Produkt aus Durchmesser D und Steigung t. Die Breite der Gänge 14 bestimmt sich folglich als Differenz zwischen der Gangsteigung D*t und einer Stegbreite d.

Eine Steigung von t=1 nach dieser Definition bedeutet, dass der an derselben Winkelposition auf dem Umfang gemessene axiale Abstand von einer Schneckenstegvorderkante zur nächsten Schneckenstegvorderkante genauso groß ist wie der Durchmesser. Zum Zwecke der Polymerentgasung ist t < D, damit die Verweilzeit der Polymerschmelze lang ist und die Wirkung der Gasabsaugung sich entfalten kann. Weiterhin ist in Figur 3 deutlich sichtbar, dass der Hauptschneckensteg 12 eine gegenläufige Orientierung zu den Satellitenschneckenstegen 17 besitzt. Das Rotorelement 11 und die Satellitenschnecken 16 rotieren gegenläufig, da sie verzahnt und direkt miteinander im Eingriff sind.

Die auf den Querschnitt beschriebenen Merkmale der Erfindung bezüglich des Einfassungsgrads der Satellitenschnecken 16 stehen in einem wichtigen Zusammenhang mit weiteren Merkmalen, die auf den in Figur 2 sichtbaren Verlauf des Rotorelements in Längsrichtung bezogen sind. Die gegenüber dem Stand der Technik vergrößerte Einfassung des Querschnitts der Satellitenschnecken 16 führt bei einem mit der Multischneckeneinheit 10 der Erfindung ausgerüstete Multischneckeneinheit nämlich zu einem Selbstreinigungseffekt, da der Hauptschneckensteg 12 über die ganze Länge und den ganzen Umfang der Gehäuseausnehmung an den Innenwänden in dem Gehäuse entlang schabt und so etwaig anheftende Polymer-Rückstände beseitigt.

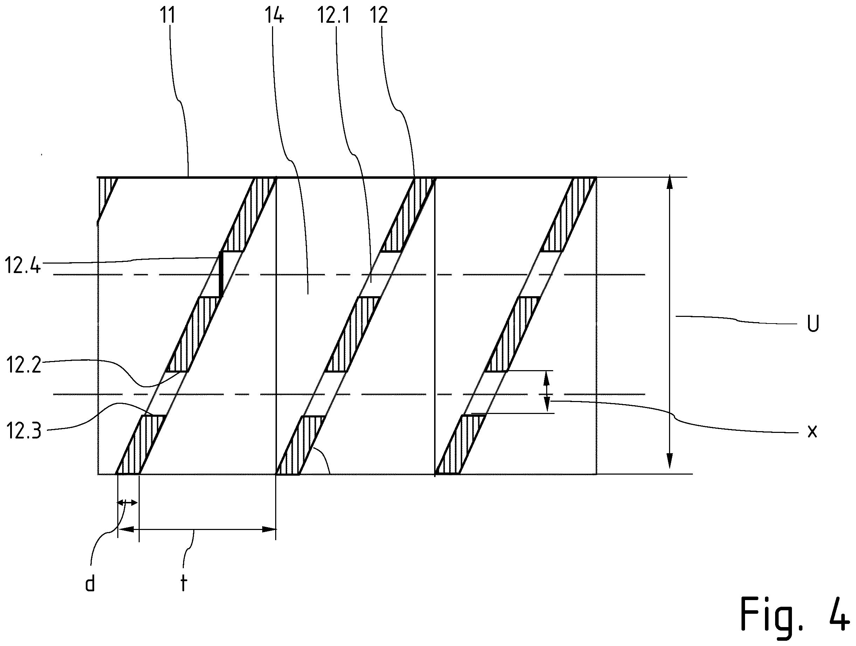

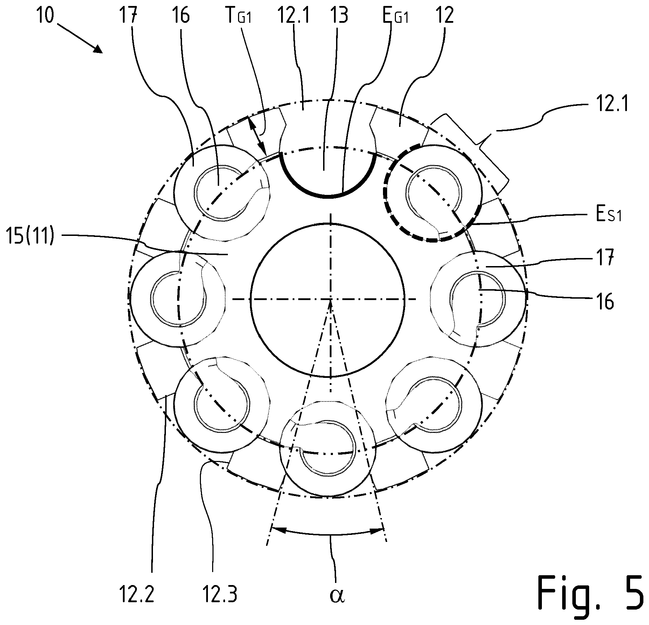

Die erfindungsgemäß vorgesehenen Einfassungsgrade der Satellitenschnecken 16 führen dementsprechend dazu, dass die Unterbrechungen im Hauptschneckensteg 12 kurz genug sind, damit die genannte Selbstreinigungswirkung gegeben ist. Diese Beziehung wird anhand der Figuren 4 und 5 erläutert.

Figur 5 zeigt einen Querschnitts des Rotorelements 11. Der für die acht Aufnahmenuten 13 jeweils unterbrochene Hauptschneckensteg 12 besitzt jeweils eine Öffnungsausnehmung 12.1 oberhalb der Aufnahmenut 13. Die oben liegende Aufnahmenut 13 ist leer dargestellt. Die ausgezogene dicke Linie charakterisiert den Einfassungsgrad der Satellitenschnecken 16 innerhalb der Gänge 14, als in den axialen Bereichen zwischen parallelen Abschnitten des Hauptschneckenstegs 12. Die gestrichelte Linie bei der Aufnahmenut 13 rechts daneben charakterisiert den Einfassungsgrad an den Stellen, wo die Satellitenschnecken 16 durch den Hauptschneckensteg 12 hindurchlaufen.

Figur 4 zeigt eine schematische Abwicklung des Außenumfangs des Rotorelements 11 mit dem Hauptschneckensteg 12 und Öffnungsausnehmungen 12.1 für eine Satellitenschnecke. Der Bohrungsdurchmesser bzw. der Außendurchmesser D des Hauptschneckenstegs 12 werden unter Gesichtspunkten wie dem gewünschten Durchsatz des Extruders oder der Viskosität des zu verarbeitenden Polymers vorab festgelegt. Der Außendurchmesser D ist somit für die weitere konstruktive Gestaltung der Multischneckeneinheit als Konstante angesehen. Daraus ergibt sich die Länge des Umfangs:

$$U = D \cdot \pi$$

Die Öffnungsweite x der Öffnungsausnehmung 12.1 wird durch den Öffnungswinkel α (vgl. Fig. 5) bestimmt:

$$x = \alpha \frac{D}{2}$$

Die funktionelle Anforderung hinsichtlich der Selbstreinigungswirkung der Multischneckeneinheit 10 legt fest, dass es zwischen den Kanten 12.2 und 12.3, welche die Öffnungsausnehmung 12.1 begrenzen, eine geringe Überlappung in axialer Richtung geben muss; dies ist in Figur 4 als Überlappungszone 12.4 gekennzeichnet.

Für die rechnerische Bestimmung gilt, dass die Kanten 12.2, 12.3 zumindest axial auf gleicher Höhe liegen müssen, damit sich keine axiale Lücke ergibt, denn im Falle einer Lücke könnte der von diesem Abschnitt des Rotorelements überstrichene Bereich der Innenwandung der Gehäuseausnehmung nicht gereinigt werden.

Daraus ergibt sich für die Stegbreite d des Hauptschneckenstegs 12 in Relation zum Öffnungswinkel α (siehe Figur 5) und zur Steigung t die folgende Beziehung:

$$d = \frac{\alpha \cdot D \cdot t}{2\pi}$$

Die Stegbreite d sollte möglichst klein ist, damit das durch die Gangbreite und Steghöhe bestimmte Fördervolumen der Gänge 14 zwischen den Abschnitten des Hauptschneckenstegs 12 möglichst groß wird. Wie bereits oben ausgeführt, sollte das Verhältnis von Stegbreite d zu Gangbreite wie folgt gewählt sein:

$$\frac{d}{D \cdot t - d} \leq \frac{1}{4}$$

Bezogen auf die Steigung t ergibt sich für die Stegbreite d:

$$d \leq \frac{D \cdot t}{5}$$

Anhand der oben genannten Stegbreitenbegrenzung von 20% der Steigung ergibt sich für den Öffnungswinkel α:

$$\alpha \leq \frac{2\pi}{5}$$

Weitere Zusammenhänge an der Multischneckeneinheit 10 nach der Erfindung ergeben sich aus den Schnittansichten in den folgenden Figuren.

In Figur 5 ist die Multischneckeneinheit 10 im Schnitt dargestellt, und zwar im Bereich der Linie IV-IV in Figur 3. Ein Teilkreis 19, der die Lage der Zentren von Aufnahmenuten 13 und Satellitenschnecken 16 vorgibt, hat einen Durchmesser, der etwa so groß ist wie der Durchmesser des Wellenkerns 15 des Rotorelements 11. Ein Teil des Kernquerschnitts der Satellitenwellen 16 ragt jeweils über die Umfangslinie des Rotorwellenkerns 15 hinaus. Dies ist erforderlich, um einerseits die Größe der Satellitenschnecken 16 begrenzt zu halten, damit sie keine wesentliche Förderwirkung entwickeln, und andererseits die Satellitenschneckenstege 17 bis an die Außenkante des Hauptschneckenstegs 12 oder zumindest in die Nähe davon reichen zu lassen. Eine solche weite radiale Erstreckung der Satellitenschneckenstege 17 nach außen wird gewählt, damit die Anteile der Öffnungen im Hauptschneckensteg, die nicht durch die projizierte Querschnittsfläche der Satellitenschnecken samt ihrer Stege 17 wieder verdeckt werden, klein bleiben. Der resultierende Einfassungsgrad $E_{G1}$ der Satellitenschnecken 16 im Gang ist durch eine in fetter Linie gezeichnete Bogenlinie wiedergegeben. Er beträgt bei diesem Beispiel weniger als 50%. Die Gangtiefe des Gangs 14 im Hauptschneckensteg 12 ist mit $T_{G1}$ bezeichnet. Zugleich ist in Fig. 4 erkennbar, dass der Anteil der Öffnung im Hauptschneckensteg 12, der nicht durch die projizierte Fläche der Satellitenschnecke 16 wieder verdeckt ist, klein bleibt.

Figur 5 zeigt eine sehr ähnliche Darstellung einer Multischneckeneinheit 10' wie in Fig. 4. Der Außendurchmesser des Hauptschneckenstegs 12', der Außendurchmesser der Satellitenschnecken 16' und der Teilkreis 19', auf dem Aufnahmenuten 13' und Satellitenschnecken 16' angeordnet sind, sind jeweils identisch zum Beispiel nach Figur 4. Unterschiedlich im Vergleich dazu ist, dass der im Hauptschneckensteg 12' ausgebildete Gang 14' eine größere Gangtiefe $T_{G2} > T_{G1}$ besitzt, womit folglich der Durchmesser des Rotorwellenkerns 15' sinkt. Der durch die fett gezeichnet Bogenlinie charakterisierte Einfassungsgrad $E_{G2}$ im Gang 14' wird damit ebenfalls kleiner, während der Einfassungsgrad $E_{S2}$ der Satellitenschnecke 16' beim Durchgang durch den Hauptschneckensteg 12' konstant bleibt.

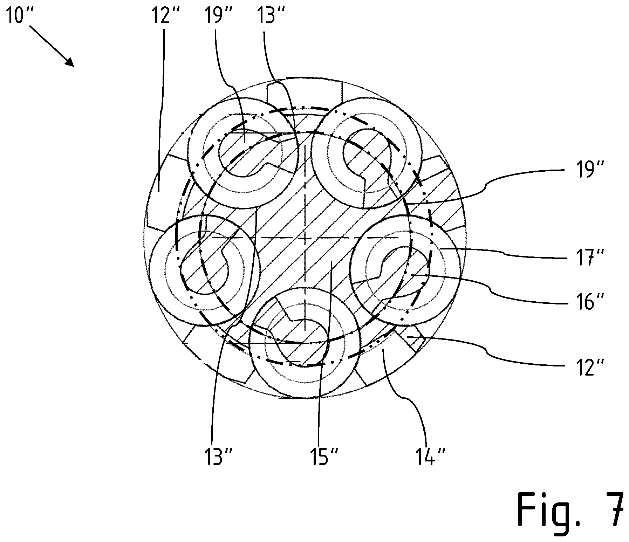

Am Wellenkern 15" der in Figur 7 dargestellten Multischneckeneinheit 10" sind fünf runde Aufnahmenuten 13" eingefräst, die um 72° zueinander versetzt auf einem gemeinsamen Teilkreis 19" angeordnet sind. Der Teilkreis 19" ist bei diesem Beispiel kleiner als der Durchmesser des Wellenkerns 15". Dadurch wird erreicht, dass die Querschnitte der jeweiligen Kernbereiche der Satellitenschnecken 16" fast vollständig innerhalb der Umfangslinie des Rotorwellenkerns 15 liegen"; das heißt, das Fördervolumen im Gang 14" im Hauptschneckensteg 12" bleibt nahezu vollständig erhalten und wird durch die Satellitenschnecken 16" kaum eingeengt.

Die im Rotorwellenkern 11" ausgebildeten Flanken der Aufnahmenuten 13" erstrecken sich jeweils über mehr als 180°, Es wird ein Einfassungsgrad erreicht wird, mehr als 50% beträgt. Dadurch sind die Satellitenschnecken 16" formschlüssig in den Aufnahmenuten 13" gelagert. Mit dem verbleibenden Anteil ihres Umfangs liegen die Satellitenschnecken 16" offen innerhalb des Gangs 14" im Hauptschneckensteg 12". Die Satellitenschneckenstege 17" der Satellitenschnecken 16 können die Schmelze somit vom Grund des Gangs 14" her gut auflockern. Da zugleich die Satellitenschneckenstege 17" bis an den Außenumfang der Hauptschneckenstege 12" reichen und gegenläufig rotieren, ist die Umwälzung besonders effektiv.

## Patentansprüche

1. Entgasungsextruder (100) mit einer Multischneckeneinheit (10; 10'; 10"), wenigstens umfassend:

   - ein Gehäuse (30) mit

      ◦ einem Zulaufbereich (20) mit einer Zulauföffnung,
      ◦ einer inneren Gehäuseausnehmung mit einer sich bis nach außen erstreckenden Absaugöffnung (32),
      ◦ einem Auslaufbereich (40) mit einer Auslauföffnung;

   - die in der Gehäuseausnehmung rotierbar angeordnete Multischneckeneinheit (10; 10'; 10"), die wenigstens umfasst:

      ◦ ein Rotorelement (11; 11'; 11") und
      ◦ wenigstens eine drehangetriebene Satellitenschnecke (16; 16'), die in einer Aufnahmenut (13; 13'; 13") auf dem Rotorelement (11; 11'; 11") gelagert ist, welche Aufnahmenut (13; 13'; 13") sich wenigstens entlang eines Teils der Länge der Multischneckeneinheit (10; 10'; 10") erstreckt,

   **dadurch gekennzeichnet, dass** das Rotorelement (11; 11'; 11") wenigstens einen sich über den Außenumfang eines Rotorwellenkerns (15; 15'; 15") erstreckenden Hauptschneckensteg (12; 12'; 12") aufweist und dass zumindest im Bereich der Absaugöffnung (32):

      - der Hauptschneckensteg (12; 12'; 12") oberhalb der Aufnahmenut (13; 13'; 13") jeweils eine Öffnungsausnehmung (12.1) zur Durchführung der Satellitenschnecke (16; 16') aufweist;
      - der Umfang der Satellitenschnecke (16; 16') in den durch den Hauptschneckensteg (12; 12'; 12") gebildeten Gängen (14, 14.1) zu mindestens 40% und maximal 70% in der Aufnahmenut (13; 13'; 13") im Rotorwellenkern (15; 15'; 15") eingefasst ist und
      - der Einfassungsgrad des Querschnitts der Satellitenschnecke (16; 16') innerhalb des Hauptschneckenstegs (12; 12'; 12") größer als in den Gängen (14; 14'; 14") außerhalb davon ist und maximal 95% beträgt.

2. Entgasungsextruder (100) nach Anspruch 1, **dadurch gekennzeichnet, dass** der Einfassungsgrad des Querschnitts der Satellitenschnecke (16; 16') zumindest in einer der axialen Zonen innerhalb des Hauptschneckenstegs (12; 12'; 12") oder in den Gängen (14; 14'; 14") außerhalb des Hauptschneckenstegs (12; 12'; 12") jeweils größer als 50% ist.

3. Entgasungsextruder (100) nach Anspruch 1 oder 2, **dadurch gekennzeichnet, dass** der Steg der Satellitenschnecke (16; 16'), bis an den Außenumfang des wenigstens einen Hauptschneckenstegs (12; 12'; 12") reicht;

4. Entgasungsextruder (100) nach einem der Ansprüche 1 bis 3, **dadurch gekennzeichnet, dass** die Mittelachsen der Satellitenschnecken (16; 16') auf einem Teilkreis angeordnet sind, der kleiner als der Durchmesser des Rotorwellenkerns (15; 15'; 15") ist.

5. Entgasungsextruder nach Anspruch 4, **dadurch gekennzeichnet, dass** mehr als 80% des Querschnitt des Wellenkerns der Satellitenschnecken (16; 16') innerhalb des Umfangs des Rotorwellenkerns (15; 15'; 15") angeordnet sind.

6. Entgasungsextruder nach einem der vorhergehenden Ansprüche, **dadurch gekennzeichnet, dass** auf dem Rotorelement (11; 11'; 11") wenigstens drei Aufnahmenuten (13; 13'; 13") ausgebildet sind, in denen jeweils eine Satellitenschnecken (16; 16') drehbar gelagert ist.

7. Entgasungsextruder nach einem der vorhergehenden Ansprüche, **dadurch gekennzeichnet, dass** die Gangtiefe ($T_{G1}$, $T_{G2}$) des Hauptschneckenstegs (12; 12'; 12") größer ist als die maximale Gangtiefe der Aufnahmenuten (13; 13'; 13").

8. Entgasungsextruder nach einem der vorhergehenden Ansprüche, **dadurch gekennzeichnet, dass** die Satellitenschnecken (16; 16') gegenläufig zum Drehsinn des Rotorelements (11; 11'; 11") rotierend angetrieben sind und eine zum Hauptschneckensteg (12; 12'; 12") entgegen gesetzte Orientierung aufweisen.

9. Entgasungsextruder nach einem der vorhergehenden Ansprüche, **dadurch gekennzeichnet, dass** der Durchmesser D und die Steigung t des Hauptschneckenstegs (12; 12'; 12") sowie die jeweilige Öffnungsweite x der Öffnungsausnehmung (12.1) derart aufeinander abgestimmt sind, dass die Innenwandung der Gehäuseausnehmung bei rotierendem Rotorelement (11) vollständig von dem Hauptschneckensteg (12; 12'; 12") überstrichen ist.

10. Entgasungsextruder nach einem der vorhergehenden Ansprüche, **dadurch gekennzeichnet, dass** das Verhältnis der Stegbreite d des Hauptschneckenstegs (12; 12'; 12") zur Gangbreite des Ganges (14; 14'; 14") kleiner als 1:4 ist.

11. Verfahren zur Verarbeitung von Polymerschmelze mittels eines Entgasungsextruders (100) nach einem der vorhergehenden Ansprüche, mit wenigstens folgenden Schritten:

- Zuführen eines Schmelzestroms zu dem in der Gehäuseausnehmung drehbar angeordneten Rotorelement (11; 11'; 11") mit wenigstens einer drehbar gelagerten Satellitenschnecke (16; 16');
- flächige Verteilung des Schmelzestroms auf dem Umfang des Rotorelements (11; 11'; 11") und der wenigstens einen Satellitenschnecke (16; 16');
- Abführen der Polymerschmelze von dem Rotorelement (11; 11'; 11") und von dem Satellitenschnecke (16; 16') zu wenigstens einem Auslaufkanal,
- Entgasen der Polymerschmelze durch Anlegen eines Vakuums an die Absaugöffnung (32);

**dadurch gekennzeichnet,**

- **dass** die auf dem Rotorelement (11; 11'; 11") verteilte Polymerschmelze über die Länge des Rotorelements (11; 11'; 11") mittels wenigstens eines auf dem Außenumfang des Rotorelements (11; 11'; 11") angeordneten Hauptschneckenstegs (12; 12'; 12") gefördert wird und wobei zur Auflockerung der in den Gängen (14; 14'; 14") des Hauptschneckenstegs (12; 12'; 12") geförderten Schmelze wenigstens eine Satellitenschnecke (16; 16') verwendet wird, die in Aufnahmenuten (13; 13'; 13") am Außenumfang des Rotorelements (11; 11'; 11") angeordnet ist;
- **dass** der Volumenstrom der zur Multischneckeneinheit (10) zugeführten Polymerschmelze und der davon abgeführte Volumenstrom derart aufeinander abgestimmt werden, dass das zwischen den benachbarten Abschnitten des Hauptschneckenstegs (12; 12'; 12"), der Außenseite des Rotorelements (11; 11'; 11") und der Innenseite der Gehäuseausnehmung eingeschlossene Fördervolumen zu weniger als 100% mit Polymerschmelze gefüllt ist.

12. Verfahren nach Anspruch 11, **dadurch gekennzeichnet, dass** bei der Entgasung das in den Gängen (14; 14'; 14") verfügbare Fördervolumen zu weniger als 80% mit Polymerschmelze gefüllt ist.

**Claims**

1. Degassing extruder (100) having a multi-screw unit (10; 10'; 10"), at least comprising:

- a housing (30), having

∘ an inlet region (20) with an inlet opening,
∘ an inner housing recess with a suction opening (32) extending as far as the outside,
∘ an outlet region (40) with an outlet opening;

- the multi-screw unit (10; 10'; 10"), which is rotatably arranged in the housing recess and at least comprises:

∘ a rotor element (11; 11'; 11") and
∘ at least one rotationally driven satellite screw (16; 16'), which is mounted in a receiving groove (13; 13'; 13") on the rotor element (11; 11'; 11"), which receiving groove (13; 13'; 13") extends at least along part of the length of the multi-screw unit (10; 10'; 10"),

**characterized in that** the rotor element (11; 11'; 11") has at least one main screw flight (12; 12'; 12") which extends over the outer circumference of a rotor shaft core (15; 15'; 15"), and **in that** at least in the region of the suction opening (32):

- the main screw flight (12; 12'; 12") above the receiving groove (13; 13'; 13") has a respective opening recess (12.1) for passing through the satellite screw (16; 16');
- the circumference of the satellite screw (16; 16') in the channels (14, 14.1) formed by the main screw flight (12; 12'; 12") is enclosed to an extent of at least 40% and at most 70% in the receiving groove (13; 13'; 13") in the rotor shaft core (15; 15'; 15") and
- the degree of enclosure of the cross section of the satellite screw (16; 16') within the main screw flight (12; 12'; 12") is greater than in the channels (14; 14'; 14") outside of this and is at most 95%.

2. Degassing extruder (100) according to Claim 1, **characterized in that** the degree of enclosure of the cross section of the satellite screw (16; 16') at least in one of the axial zones within the main screw flight (12; 12'; 12") or in the channels (14; 14'; 14") outside the main screw flight (12; 12'; 12") is greater than 50% in each case.

3. Degassing extruder (100) according to Claim 1 or 2, **characterized in that** the flight of the satellite screw (16; 16') reaches as far as the outer circumference of the at least one main screw flight (12; 12'; 12").

4. Degassing extruder (100) according to one of Claims 1 to 3, **characterized in that** the centre axes of the satellite screws (16; 16') are arranged on a pitch circle which is smaller than the diameter of the rotor shaft core (15; 15'; 15").

5. Degassing extruder according to Claim 4, **characterized in that** more than 80% of the cross section of the shaft core of the satellite screws (16; 16') is arranged within the circumference of the rotor shaft core (15; 15'; 15").

6. Degassing extruder according to one of the preceding claims, **characterized in that** formed on the rotor element (11; 11'; 11") are at least three receiving grooves (13; 13'; 13"), in each of which a satellite screw (16; 16') is rotatably mounted.

7. Degassing extruder according to one of the preceding claims, **characterized in that** the channel depth ($T_{G1}$, $T_{G2}$) of the main screw flight (12; 12'; 12") is greater than the maximum channel depth of the receiving grooves (13; 13'; 13").

8. Degassing extruder according to one of the preceding claims, **characterized in that** the satellite screws (16; 16') are driven in rotation in the opposite direction to the direction of rotation of the rotor element (11; 11'; 11") and have an orientation which is opposite to the main screw flight (12; 12'; 12").

9. Degassing extruder according to one of the preceding claims, **characterized in that** the diameter D and the pitch t of the main screw flight (12; 12'; 12") and the respective opening width x of the opening recess (12.1) are coordinated to one another in such a way that the inner wall of the housing recess is passed over completely by the main screw flight (12; 12'; 12") when the rotor element (11) is rotating.

10. Degassing extruder according to one of the preceding claims, **characterized in that** the ratio of the flight width d of the main screw flight (12; 12'; 12") to the channel width of the channel (14; 14'; 14") is less than 1:4.

11. Method for processing a polymer melt by means of a degassing extruder (100) according to one of the preceding claims, comprising at least the following steps:

- feeding a melt stream to the rotor element (11; 11'; 11") rotatably arranged in the housing recess and having at least one rotatably mounted satellite screw (16; 16');
- surface-area distribution of the melt stream on the circumference of the rotor element (11; 11'; 11") and the at least one satellite screw (16; 16');
- discharging the polymer melt from the rotor element (11; 11'; 11") and from the satellite screw (16; 16') to at least one outlet channel,
- degassing the polymer melt by applying a vacuum to the suction opening (32);

**characterized in**

- **that** the polymer melt distributed on the rotor element (11; 11'; 11") is conveyed over the length of the rotor element (11; 11'; 11") by means of at least one main screw flight (12; 12'; 12") arranged on the outer circumference of the rotor element (11; 11'; 11") and wherein, to loosen up the melt conveyed in the channels (14; 14'; 14") of the main screw flight (12; 12'; 12"), at least one satellite screw (16; 16') which is arranged in receiving grooves (13; 13'; 13") on the outer circumference of the rotor element (11; 11'; 11") is used;
- **that** the volumetric flow of the polymer melt fed to the multi-screw unit (10) and the volumetric flow discharged therefrom are coordinated to one another in such a way that the conveying volume enclosed between the adjacent portions of the main screw flight (12; 12'; 12"), the outer side of the rotor element (11; 11'; 11") and the inner side of the housing recess is filled to an extent of less than 100% with polymer melt.

12. Method according to Claim 11, **characterized in that** during the degassing, the conveying volume available in the channels (14; 14'; 14") is filled to an extent of less than 80% with polymer melt.

## Revendications

1. Extrudeuse de dégazage (100) avec une unité à vis sans fin multiples (10 ; 10' ; 10"), comprenant au moins :

   - un boîtier (30) avec

      ◦ une zone d'arrivée (20) avec une ouverture d'arrivée,
      ◦ un évidement de boîtier intérieur avec une ouverture d'évacuation par aspiration (32) s'étendant jusque vers l'extérieur,
      ◦ une zone de sortie (40) avec une ouverture de sortie ;

   - l'unité à vis sans fin multiples (10 ; 10' ; 10") disposée de manière à pouvoir tourner dans l'évidement de boîtier, qui comprend au moins :

      ◦ un élément de rotor (11 ; 11' ; 11'') et
      ◦ au moins une vis sans fin auxiliaire (16 ; 16') entraînée en rotation, qui est montée dans une rainure de réception (13 ; 13' ; 13'') sur l'élément de rotor (11 ; 11' ; 11''), laquelle rainure de réception (13 ; 13' ; 13'') s'étend au moins le long d'une partie de la longueur de l'unité à vis sans fin multiple (10 ; 10' ; 10"),

**caractérisée en ce que** l'élément de rotor (11 ; 11' ; 11") comporte au moins une crête de vis sans fin principale (12 ; 12' ; 12") s'étendant sur la périphérie extérieure d'un noyau (15 ; 15' ; 15'') d'arbre de rotor et que, au moins dans la zone de l'ouverture d'évacuation par aspiration (32) :

   - la crête de vis sans fin principale (12 ; 12' ; 12") comporte au-dessus de la rainure de réception (13 ; 13' ; 13") respectivement un évidement d'ouverture (12.1) destiné au passage de la vis sans fin auxiliaire (16 ; 16') ;
   - la périphérie de la vis sans fin auxiliaire (16 ; 16') est bordée, dans les spires (14, 14.1) formées par la crête de vis sans fin principale (12 ; 12' ; 12''), à au moins 40 % et au maximum à 70 % dans la rainure de réception (13 ; 13' ; 13'') dans le noyau d'arbre de rotor (15 ; 15' ; 15''), et
   - le degré de bordure de la section transversale de la vis sans fin auxiliaire (16 ; 16') à l'intérieur de la crête de vis sans fin principale (12 ; 12' ; 12") est plus grand que dans les spires (14 ; 14' ; 14") à l'extérieur de celle-ci et est égal au maximum à 95 %.

2. Extrudeuse de dégazage (100) selon la revendication 1, **caractérisée en ce que** le degré de bordure de la section transversale de la vis sans fin auxiliaire (16 ; 16') est supérieur à 50 % respectivement au moins dans une des zones axiales à l'intérieur de la crête de vis sans fin principale (12 ; 12' ; 12") ou dans les spires (14 ; 14' ; 14") à l'extérieur de la crête de vis sans fin principale (12 ; 12' ; 12").

3. Extrudeuse de dégazage (100) selon la revendication 1 ou 2, **caractérisée en ce que** la crête de la vis sans fin auxiliaire (16 ; 16') atteint la périphérie extérieure de l'au moins une crête de vis sans fin principale (12 ; 12' ; 12").

4. Extrudeuse de dégazage (100) selon l'une des revendications 1 à 3, **caractérisée en ce que** les axes centraux des vis sans fin auxiliaires (16 ; 16') sont disposés sur un cercle partiel, qui est inférieur au diamètre du noyau d'arbre de rotor (15 ; 15' ; 15").

5. Extrudeuse de dégazage selon la revendication 4, **caractérisée en ce que** plus de 80 % de la section transversale du noyau d'arbre des vis sans fin auxiliaires (16 ; 16') sont disposés à l'intérieur de la périphérie du noyau d'arbre de rotor (15 ; 15' ; 15").

6. Extrudeuse de dégazage selon l'une des revendications précédentes, **caractérisée en ce que** sont réalisées sur l'élément de rotor (11 ; 11' ; 11") au moins trois rainures de réception (13 ; 13' ; 13"), dans lesquelles une vis sans fin auxiliaire (16 ; 16') est montée respectivement de manière à pouvoir tourner.

7. Extrudeuse de dégazage selon l'une des revendications précédentes, **caractérisée en ce que** la profondeur ($T_{G1}$, $T_{G2}$) de spire de la crête de vis sans fin principale (12 ; 12' ; 12'') est supérieure à la profondeur de spire maximale des rainures de réception (13 ; 13' ; 13").

8. Extrudeuse de dégazage selon l'une des revendications précédentes, **caractérisée en ce que** les vis sans fin auxiliaires (16 ; 16') sont entraînées en rotation en sens inverse par rapport au sens de rotation de l'élément de rotor (11 ; 11' ; 11") et présentent une orientation placée à l'opposé de la crête de vis sans fin principale (12 ; 12' ; 12").

9. Extrudeuse de dégazage selon l'une des revendications précédentes, **caractérisée en ce que** le diamètre D et l'inclinaison t de la crête de vis sans fin principale (12 ; 12' ; 12'') ainsi que la largeur d'ouverture x respective de l'évidement d'ouverture (12.1) sont adaptés l'un à l'autre de telle manière que la paroi intérieure de l'évidement de boîtier est totalement balayée par la crête de vis sans fin principale (12 ; 12' ; 12") lorsque l'élément de rotor (11) tourne.

10. Extrudeuse de dégazage selon l'une des revendications précédentes, **caractérisée en ce que** le rapport de la largeur de crête d de la crête de vis sans fin principale (12 ; 12' ; 12") par rapport à la largeur de spire de la spire (14 ; 14' ; 14") est inférieur à 1:4.

11. Procédé de traitement de la matière fondue de polymère au moyen d'une extrudeuse de dégazage (100) selon l'une des revendications précédentes, avec au moins les étapes suivantes :

   - amenée d'un flux de matière fondue à l'élément de rotor (11 ; 11' ; 11") disposé de manière à pouvoir tourner dans l'évidement de boîtier avec au moins une vis sans fin auxiliaire (16 ; 16') montée de manière à pouvoir tourner ;
   - répartition à plat du flux de matière fondue sur la périphérie de l'élément de rotor (11 ; 11' ; 11'') et de l'au moins une vis sans fin auxiliaire (16 ; 16') ;
   - évacuation de la matière fondue de polymère de l'élément de rotor (11 ; 11' ; 11'') et de la vis sans fin auxiliaire (16 ; 16') vers au moins un canal de sortie,
   - dégazage de la matière fondue de polymère par application d'un vide sur l'ouverture d'évacuation par aspiration (32) ;

**caractérisé en ce**

   - **que** la matière fondue de polymère répartie sur l'élément de rotor (11 ; 11' ; 11'') est refoulée sur la longueur de l'élément de rotor (11 ; 11' ; 11") au moyen d'au moins une crête de vis sans fin principale (12 ; 12' ; 12'') disposée sur la périphérie extérieure de l'élément de rotor (11 ; 11' ; 11'') et au moins une vis sans fin auxiliaire (16 ; 16'), qui est disposée dans des rainures de réception (13 ; 13' ; 13") sur la périphérie extérieure de l'élément de rotor (11 ; 11' ; 11") étant utilisée pour ramollir la matière fondue refoulée dans les spires (14 ; 14' ; 14'') de la crête de vis sans fin principale (12 ; 12' ; 12") ;
   - **que** le débit volumique de la matière fondue de polymère amenée à l'unité à vis sans fin multiples (10) et le débit volumique évacué de celle-ci sont adaptés l'un à l'autre de telle manière que le volume de refoulement renfermé entre les sections adjacentes de la crête de vis sans fin principale (12 ; 12' ; 12"), le côté extérieur de l'élément de rotor (11 ; 11' ; 11") et le côté intérieur de l'évidement de boîtier est rempli de matière fondue de polymère à moins de 100 %.

12. Procédé selon la revendication 11, **caractérisé en ce que** lors du dégazage, le volume de refoulement disponible dans les spires (14 ; 14' ; 14'') est rempli de matière fondue de polymère à moins de 80 %.

Fig. 1

Fig. 2

Fig. 3

41  42  11  14.1  16  17  12  14  IV  10

D

d  t

IV

15

EP 3 880 429 B1

Fig. 4

Fig. 5

Fig. 6

Fig. 7

**EP 3 880 429 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013180941 A1
- WO 2003033240 A1
- CN 101293397 A
- CN 101837633 A
- CN 1775506 A
- WO 2016081474 A1
- WO 2014183984 A1